# EUROPEAN PATENT SPECIFICATION

(11) **EP 0 281 226 B1**
(45) Date of publication and mention of the grant of the patent: **01.03.1995**
(21) Application number: 88300405.3
(22) Date of filing: 19.01.1988
(51) Int. Cl.: C09K 21/00, C09D 5/18

(54) **Endothermic fire protective material**
Endothermisches Brandschutzmaterial
Matériau ignifuge endothermique

(30) Priority: 22.01.1987 US 5945
(43) Date of publication of application: 07.09.1988
(73) Proprietor: MINNESOTA MINING AND MANUFACTURING COMPANY, St. Paul, Minnesota 55133-3427 (US)
(72) Inventor: Langer, Roger L. c/o Minnesota Mining and, P.O. Box 33427 St. Paul Minnesota 55133 (US)
(74) Representative: Baillie, Iain Cameron

(56) References cited:
- FR-A- 2 291 251
- US-A- 4 443 520
- US-A- 4 600 634
- PATENT ABSTRACTS OF JAPAN, vol. 9, no. 28 (C-264)[1751], 6th February 1985; & JP-A-59 174 655 03-10-1984 *whole document*

## Description

The present invention relates to a water-based endothermic fire protective material comprising a heat curable thermosetting resin, inorganic fibers, endothermic inorganic filler and thermoplastic resin which is particularly useful for fire stopping purposes.

In commercial buildings, electrical cables, electric cable trays and telephone cable trays pass through penetrations in walls, floors and ceilings. The penetrations for these members are necessarily somewhat larger than the members themselves. In the event of a fire, it is possible for flames, heat and smoke to pass through these penetrations thereby spreading the fire and smoke.

The possibility of fires in areas with high concentrations of instrument and communication wires as well as power transmission cables is of great concern in automated industrial plants. Communications and power cables are manufactured with combustible electrical insulation sheaths which can provide a fuel pathway to enable a fire to spread. Although floors, walls and ceilings serve as a discrete barrier to contain a fire in a room, such fires need to be arrested by properly designed fire protective materials placed not only around the cable runs but also for use in filling the gaps and interfaces in the penetrations. In this manner the fire can be contained to permit an orderly shutdown to isolate the system and extinguish the fire with minimal spread and damage.

Cable and communications systems manufacturers are acutely aware of the problem and have directed considerable research efforts towards developing systems characterized by low flame spread and particularly lower fuel load. There are a number of methods described in the patent prior art relating to the sealing of the openings around pipes and cable members. Silicone foams have been used but have the difficulty of position retention until the foam is set. Other means include stuffing the penetration with inorganic fibers. However, these fiber batts do not always stay in place and can be easily dislodged.

Compositions employing char-forming, endothermic, intumescent, and/or sublimation reactions from the heat from fires are disclosed in various forms. For example, U.S. Patent 3,849,178 discloses a subliming and endothermic phase change coinciding with an intumescent char-former when exposed to fires. The active components and binders in this composition must be thermoplastic and soften or melt to carry out the sublimation endothermic outgasing process in order to be effective. U.S. Patent 4,189,619 discloses compositions containing fusing ceramic, hydrous metal oxides, intumescent solids, and binder solids which are thermoplastic resins. U.S. Patent 4,363,199 also uses hydrous metal oxides along with a substantial amount of an inorganic binder, colloidal silica, acting as a refractory adhesive when exposed to high temperatures. In U.S. Patent 4,600,634, highly filled endothermic fibrous sheet materials utilizing minimal amounts of resinous binders that are also thermoplastic are disclosed. Utilizing formulations in which the fusible ceramic solids are activated during a fire and fuse at 371°C to 816°C (700-1500°F) temperature range (U.S. Patent 4,189,619) or where the colloidal silica is fused at high temperatures to increase its strength during a fire (U.S. Patent 4,363,199) limits the amount of active ingredients (e.g., subliming, endothermic, intumescent) that can be used because the relatively large amounts of inorganic thermally fusible material comprises a significant portion of the compositions.

US Patent US-A-4,595,714, while disclosing fire protective materials containing epoxy resins, does not suggest that a range of 5 weight percent epoxy resin can result in a dramatic reduction in air eroded material.

JP 59/174,655 discloses water-based fire-resistant coating composition for use in construction material, the compositions comprising 1 to 5 dry weight percent bisphenol-type epoxy emulsion resin, 2 to 15 dry weight percent (meth)acrylic ester-copolymerised resin emulsion (which acts as a binder resin), 20 to 60 dry weight percent gypsum hemihydrate filler and 25 to 70 dry weight percent of additional filler, together with small amounts of pigment and polyamide resin or aliphatic amine curing agent. This document teaches that when the amount of epoxy resin exceeds 5 weight percent "the environmental resistance of the coating obtained deteriorates excessively". The Examples all utilise 3% or less epoxy resin. The disclosed coating compositions cure after application.

The present invention relates to water-based endothermic fire protective materials capable of withstanding prolonged flame and heat exposure and having improved resistance to degradation during the subsequent impact, erosion, and cooling effects of a hose stream.

These results are achieved through the incorporation of a specified amount of a heat curable thermosetting resin into an otherwise thermoplastic flexible fire protective material wherein the heat curable thermosetting resin hardens and strengthens the unexposed, unfired portion of the material during exposure to a fire.

Accordingly, the water-based endothermic fire protective material of this invention comprises 5-10% dry weight of a non-halogenated heat curable thermosetting epoxy resin, 5-20% dry weight of a thermoplastic binder resin, at least 60%dry weight hydrated inorganic endothermic filler, and 1-5% dry weight of inorganic fiber, said heat curable thermosetting resin hardening upon exposure to fire.

Wetting agents, dispersants, thickeners and defoamers as well as intumescent materials may also optionally be included in the compositions of this invention. The material can vary in viscosity from a putty that is hand moldable or trowelable to a "paint" that could be sprayed onto a substrate to form a fire protective coating for example. The viscosity can be easily modified by varying the water content and making minor adjustments to the processing aids (dispersants, thickeners, defoamers, wetting agents) of the present invention.

Suitable heat curing thermosetting epoxy resins which can be employed include non-halogenated liquid or solid epoxy resins.

Suitable binder resins can, for example, include various polymers and elastomers in latex form, such as, natural rubber latex, polyvinyl acetate latices, styrene-butadiene latices, butadiene acrylonitrile latices, and latices of acrylate and methacrylate polymers and copolymers (e.g., polymethyl acrylate, polyethyl acrylate, and polymethyl methacrylate). Halogen-free polymers are preferred to avoid the release of noxious and corrosive halogen gases upon decomposition during a fire. Acrylic polymers are preferred because of their excellent heat resistance, aging properties, and noncorrosive combustion products.

The hydrated inorganic endothermic filler material is preferably a powder having a mean particle size less than 60 micrometers, more preferably 12 micrometers. Such particle size allows the filler load to be maximized while still maintaining desirable physical properties. Typical filler materials may be hydrated metal oxides and borates. The filler should be relatively insoluble in water, chemically inert and should not require a synergist. Alumina trihydrate, magnesium hydroxide (hydrated magnesia) and zinc borate possess these properties. Alumina trihydrate is presently preferred.

Inorganic fibrous materials useful in the present invention must be dispersible in the latex binder resin and must not agglomerate the other solid components of the compositions. Especially useful as the inorganic fibrous component is fiberglass in a length of 3 mm and a diameter of 14 micrometers, although other lengths and diameters are also useful.

Further preferred features are defined in the dependent claims.

### Comparative Example C1

A laboratory sized (approximately 2 liters) sample was prepared in the following manner: 571 grams of acrylic resin latex obtained as Rhoplex HA-8 latex, 10 grams of a wetting agent obtained as Triton X-405, 5 grams of a dispersant obtained as Tamol 850. All of the above, obtained from Rohm & Haas Company, and 150 grams of water were mixed in a Model N-50 Hobart mixer at slow speed using the "B" Flat Beater blade. 53 grams of Scotchcast 265 epoxy resin powder obtained from 3M and 1750 grams of alumina trihydrate obtained as Techfill A212 from Great Lakes Minerals Company were slowly added and mixed into the above mixture. 55 grams of wet 3 mm long, 14 micron diameter fiberglass obtained as Chop-Pak A205 (contains 17% water) obtained from Manville Corporation was added, followed by 5 grams of hydroxypropyl methylcellulose thickener obtained as Methocel K4M from Dow Chemical Company, followed by 10 grams of a 50% solution defoamer obtained as Foamaster DF-160L from Napco Chemical Company. The fire protective composition so prepared has a wet density of 1.62 to 1.74 gm/cc (13.5 to 14.5 lb/gal), Semco caulk rate 3.2mm (1/8") orifice at 0.34 MPa (50 psi) of 200 to 1200 gm/min, drying shrinkage of not more than about 5% by volume, and displays excellent adhesion to materials such as concrete, steel, and aluminum, and displays good flexibility in the dried state.

A 980°C hot side test was performed on the sample to observe the endothermic nature (time vs temperature rise) of the composition. The fired sample was subsequently subjected to an air blast erosion test to quantify the strengthening effect of the heat curable thermosetting resin in the composition. This test consists of forming the composition, 380 mm thick into a 500 mm diameter hole bored into a K-3000 fire brick which was presized to fit a 12 cm x 10 cm door cavity of Blue "M" Model M15A-2A muffle furnace. A thermocouple was centrally located in the test specimen before drying for 15 hours at 75°C, then 2 hours at 105°C and cooled to ambient temperature before testing. The brick test sample was inserted into the door opening of the 980°C preheated furnace. Time vs. temperature rise was recorded during heating until the thermocouple temperature reached 540°C, at which time the brick was removed and cooled. The fired side of the sample was then eroded with an air blast from a 4.5 mm orificed air nozzle set at 206.7 kPa (30 psi). The air pressure erosion weight loss was determined.

### Comparative Examples C1 to C3 and Examples 1 to 3

Comparative Examples C2 and C3 wherein no heat curable thermosetting resin was used and additional Examples 1-3 according to the present invention with varying amounts and types of heat curable thermosetting resins were prepared as above. Test results of each of the Examples in the above described tests are shown in Table 1.

**TABLE 1**

| ENDOTHERMIC MATERIAL COMPOSITION (dry weight percent) | | | | | | |
|---|---|---|---|---|---|---|
| Example | C2 | C1 | 1 | 2 | 3 | C3 |
| Acrylic resin solids | 14.7 | 12.2 | 9.7 | 7.2 | 13.9 | 12.2 |
| Epoxy resin powder | 0 | 2.5 | 5.0 | 7.5 | 10.0 | -- |
| Phenolic resin (Varcum 29-592, BTL Specialty Resin Co.) | -- | -- | -- | -- | -- | 2.5 |
| Process Additives | 0.9 | 0.9 | 0.9 | 0.9 | 1.1 | 0.9 |
| Total organic material | 15.6 | 15.6 | 15.6 | 15.6 | 25.0 | 15.6 |
| Fiber Glass | 2.1 | 2.1 | 2.1 | 2.1 | 2.4 | 2.1 |
| Alumina trihydrate | 82.3 | 82.3 | 82.3 | 82.3 | 72.6 | 82.3 |
| Time to 540°C(min) | 80 | 82 | 82 | 78 | 74 | 82 |
| Air Erosion Material Loss(%) | 52.2 | 41.1 | 18.4 | 6.6 | 0.3 | 31.3 |

Examples 1 to 3 in Table 1 show a dramatic reduction in air eroded material loss achieved through the addition of amounts of heat curable thermosetting resin of 5% to 10% without a significantly deleterious effect on the endothermic nature (temperature rise) of the material.

## Claims

1. A water-based endothermic fire protective material comprising 5 to 10 dry weight percent of a non-halogenated heat curable thermosetting epoxy resin, 5 to 20 dry weight percent of a thermoplastic binder resin, at least 60 dry weight percent hydrated inorganic endothermic filler and 1 to 5 dry weight percent inorganic fiber, said heat curable thermosetting resin hardening upon exposure to fire.

2. The water-based endothermic fire protective material of claim 1 wherein the thermoplastic binder resin is acrylic polymer.

3. The water-based endothermic fire protective material of either of claims 1 and 2 wherein the thermoplastic binder resin is a non-halogenated resin.

4. The water-based endothermic fire protective material of any preceding claim wherein the hydrated inorganic endothermic filler is alumina trihydrate, magnesium hydroxide or zinc borate or combinations thereof.

5. The water-based endothermic fire protective material of claim 4 wherein the hydrated inorganic endothermic filler is alumina trihydrate.

6. The water-based endothermic fire protective material of any preceding claim wherein the mean particle size of the endothermic filler is less than 60 micrometers.

7. The water-based endothermic fire protective material of any preceding claim wherein the inorganic fiber is silica, alumino-silicate or glass fiber.

8. The water-based endothermic fire protective material of claim 7 wherein the inorganic fiber is glass fiber.

## Patentansprüche

1. Wasserhaltiges, endothermisches Brandschutzmaterial mit: 5 bis 10 Trockengewichtsprozent eines nicht-halogenierten, wärmehärtbaren Epoxidharzes; 5 bis 20 Trockengewichtsprozent eines thermoplastischen Binderharzes; mindestens 60 Trockengewichtsprozent eines hydrierten, anorganischen, endothermischen Füllstoffes; und 1 bis 5 Trockengewichtsprozent einer anorganischen Faser, wobei das wärmehärtbare Harz aushärtet, wenn es Feuer ausgesetzt ist.

2. Wasserhaltiges, endothermisches Brandschutzmaterial nach Anspruch 1, wobei es sich bei dem thermoplastischen Binderharz um Acrylpolymer handelt.

3. Wasserhaltiges, endothermisches Brandschutzmaterial nach Anspruch 1 oder 2, wobei es sich bei dem thermoplastischen Binderharz um ein nicht-halogeniertes Harz handelt.

4. Wasserhaltiges, endothermisches Brandschutzmaterial nach einem der vorstehenden Ansprüche, wobei es sich bei dem hydrierten, anorganischen, endothermischen Füllstoff um Aluminiumoxidtrihydrat, Magnesiumhydroxid, Zinkborat, oder Kombinationen dieser Stoffe handelt.

5. Wasserhaltiges, endothermisches Brandschutzmaterial nach Anspruch 4, wobei es sich bei dem hydrierten, anorganischen, endothermischen Füllstoff um Aluminiumoxidtrihydrat handelt.

6. Wasserhaltiges, endothermisches Brandschutzmaterial nach einem der vorstehenden Ansprüche, wobei die mittlere Teilchengröße des endothermischen Füllstoffs geringer ist als 60 Mikrometer.

7. Wasserhaltiges, endothermisches Brandschutzmaterial nach einem der vorstehenden Ansprüche, wobei es sich bei der anorganischen Faser um Silika, Aluminosilikat oder Glasfaserstoff handelt.

8. Wasserhaltiges, endothermisches Brandschutzmaterial nach Anspruch 7, wobei es sich bei der anorganischen Faser um Glasfaserstoff handelt.

## Revendications

1. Matériau ignifuge endothermique à base d'eau comprenant 5 à 10 % en poids sec d'une résine époxy thermodurcissable réticulable à chaud non halogénée, 5 à 20 % en poids sec d'un liant résine thermoplastique, au moins 60 % en poids sec d'une charge endothermique minérale hydratée et 1 à 5 % en poids sec de fibre minérale, ladite résine thermodurcissable réticulable à chaud durcissant quand elle est exposée au feu.

2. Matériau ignifuge endothermique à base d'eau selon la revendication 1, dans lequel le liant résine thermoplastique est un polymère acrylique.

3. Matériau ignifuge endothermique à base d'eau selon l'une des revendications 1 et 2, dans lequel le liant résine thermoplastique est une résine non halogénée.

4. Matériau ignifuge endothermique à base d'eau selon l'une quelconque des revendications précédentes, dans lequel la charge endothermique minérale hydratée est un trihydrate d'alumine, en hydroxyde de magnésium ou un borate de zinc ou une combinaison de ceux-ci.

5. Matériau ignifuge endothermique à base d'eau selon la revendication 4, dans lequel la charge endothermique minérale hydratée est un trihydrate d'alumine.

6. Matériau ignifuge endothermique à base d'eau selon l'une quelconque des revendications précédentes, dans lequel la granulométrie moyenne de la charge endothermique est inférieure à 60 micromètres.

7. Matériau ignifuge endothermique à base d'eau selon l'une quelconque des revendications précédentes, dans lequel la fibre minérale est une fibre de silice, d'aluminosilicate ou de verre.

8. Matériau ignifuge endothermique à base d'eau selon la revendication 7, dans lequel la fibre minérale est de la fibre de verre.
